# EUROPEAN PATENT APPLICATION

(11) **EP 4 502 044 A1**
(43) Date of publication of application: **05.02.2025**
(21) Application number: 23779529.9
(22) Date of filing: 13.03.2023
(51) Int. Cl.: C08L 27/06, C08J 7/04, C08L 3/02, C08L 67/00

(54) **VINYL CHLORIDE RESIN COMPOSITION, VINYL CHLORIDE RESIN MOLDED ARTICLE, AND LAMINATE**

(30) Priority: 31.03.2022 JP 2022061256
(71) Applicant: Zeon Corporation, Tokyo 100-8246 (JP)
(72) Inventor: FUJIWARA, Takanori, Tokyo 100-8246 (JP)
(74) Representative: Maiwald GmbH
(86) International application number: PCT/JP2023/009724
(87) International publication number: WO 2023/189509

(57) **Abstract**

Provided is a vinyl chloride resin composition that is capable of forming a vinyl chloride resin molded product in which tear fusion is suppressed. The vinyl chloride resin composition contains a vinyl chloride resin, a plasticizer, and starch. The vinyl chloride resin composition is preferably used in powder slush molding.

## Description

### TECHNICAL FIELD

The present disclosure relates to a vinyl chloride resin composition, a vinyl chloride resin molded product, and a laminate.

### BACKGROUND

Vinyl chloride resins are used in a variety of applications due to generally having excellent characteristics in terms of cold resistance, heat resistance, oil resistance, and so forth.

Specifically, automobile interior materials such as a surface skin formed of a vinyl chloride resin molded product and a laminate obtained by lining a surface skin formed of a vinyl chloride resin molded product with a foamed product such as foamed polyurethane are used in the formation of automobile interior components such as automobile instrument panels and door trims.

A vinyl chloride resin molded product that constitutes a surface skin of an automobile interior component such as an automobile instrument panel is produced, for example, by performing molding by a known molding method such as powder molding with respect to a vinyl chloride resin composition that contains a vinyl chloride resin, a plasticizer, and various additives (for example, refer to Patent Literature (PTL) 1).

As one specific example, a surface skin formed of a vinyl chloride resin molded product is produced in PTL 1 through powder slush molding of a vinyl chloride resin composition that contains a vinyl chloride resin, plasticizers such as a trimellitic acid ester and a polyester, and additives such as a stabilizer, a mold release agent, and a pigment.

### CITATION LIST

### Patent Literature

PTL 1: WO2020/090556A1

### SUMMARY

### (Technical Problem)

In a situation in which a laminate in which a surface skin formed of a vinyl chloride resin molded product is lined with a foamed polyurethane molded product is to be formed, there are instances in which an incision (also referred to as a "slit", "tear", or the like) is formed in advance in a surface of the vinyl chloride resin molded product at a side that is to be in contact with the foamed polyurethane molded product. For example, in a case in which an airbag is incorporated into an automobile instrument panel in which this laminate is used, the formation of an incision in the surface of the vinyl chloride resin molded product in advance enables good rupturing of the surface skin formed of the vinyl chloride resin molded product upon expansion of the airbag and can improve safety.

Note that in a situation in which the incision that has been formed in the surface of the vinyl chloride resin molded product fuses and closes at high temperature, this may result in a problem that the surface skin formed of the vinyl chloride resin molded product does not tend to rupture well upon expansion of the airbag.

Therefore, it is desirable that the fusion of an incision (hereinafter, also referred to as "tear fusion") in a vinyl chloride resin molded product is suppressed.

However, a vinyl chloride resin molded product that is formed using the vinyl chloride resin composition of the conventional technique described above leaves room for improvement in terms of suppressing tear fusion.

Accordingly, one object of the present disclosure is to provide a vinyl chloride resin composition that is capable of forming a vinyl chloride resin molded product in which tear fusion is suppressed.

Another object of the present disclosure is to provide a vinyl chloride resin molded product in which tear fusion is suppressed.

Yet another object of the present disclosure is to provide a laminate including this vinyl chloride resin molded product.

### (Solution to Problem)

The inventor conducted diligent investigation with the aim of solving the problem set forth above. The inventor discovered that a vinyl chloride resin molded product in which tear fusion is suppressed can be obtained through molding of a vinyl chloride resin composition that contains a vinyl chloride resin, a plasticizer, and starch, and, in this manner, completed the present disclosure.

Specifically, with the aim of advantageously solving the problem set forth above, [1] a presently disclosed vinyl chloride resin composition comprises a vinyl chloride resin, a plasticizer, and starch. By molding a vinyl chloride resin composition that contains a vinyl chloride resin, a plasticizer, and starch in this manner, it is possible to form a vinyl chloride resin molded product in which tear fusion is suppressed.

[2] In the vinyl chloride resin composition according to the foregoing [1], content of the starch is preferably not less than 1 part by mass and not more than 30 parts by mass relative to 100 parts by mass of the vinyl chloride resin. When the content of the starch in the vinyl chloride resin composition is within the specific range set forth above, tear fusion of a formed vinyl chloride resin molded product can be further suppressed. Moreover, when the content of the starch in the vinyl chloride resin composition is within the specific range set forth above, sufficiently high powder fluidity of the vinyl chloride resin composition and tensile elongation of a formed vinyl chloride resin molded product at low temperature (hereinafter, also referred to as "low-temperature tensile elongation") can be ensured, and sufficiently good external appearance of the vinyl chloride resin molded product can also be preserved. Furthermore, when the content of the starch in the vinyl chloride resin composition is within the specific range set forth above, reduction of low-temperature tensile elongation between before and after heating of a formed vinyl chloride resin molded product can be suppressed, and gloss change between before and after heating of the vinyl chloride resin molded product can also be sufficiently suppressed.

[3] In the vinyl chloride resin composition according to the foregoing [1] or [2], the starch preferably has a volume-average particle diameter of 200 µm or less. By using starch having a volume-average particle diameter that is not more than the specific value set forth above, it is possible to suppress the formation of irregularities at the surface of a formed vinyl chloride resin molded product and preserve sufficiently good external appearance of the vinyl chloride resin molded product. Moreover, by using starch having a volume-average particle diameter that is not more than the specific value set forth above, it is possible to further suppress tear fusion of a formed vinyl chloride resin molded product. Furthermore, by using starch having a volume-average particle diameter that is not more than the specific value set forth above, it is possible to sufficiently suppress gloss change between before and after heating of a formed vinyl chloride resin molded product and also to suppress reduction of low-temperature tensile elongation between before and after heating of the vinyl chloride resin molded product.

Note that the "volume-average particle diameter" of starch referred to in the present disclosure is the particle diameter (D50) at which, in a particle size distribution (by volume) measured by laser diffraction, cumulative volume calculated from a small diameter end of the distribution reaches 50%.

[4] In the vinyl chloride resin composition according to any one of the foregoing [1] to [3], content of the starch is preferably not less than 1 part by mass and not more than 30 parts by mass relative to 100 parts by mass of the plasticizer. When the content of the starch in the vinyl chloride resin composition is within the specific range set forth above, tear fusion of a formed vinyl chloride resin molded product can be further suppressed. Moreover, when the content of the starch in the vinyl chloride resin composition is within the specific range set forth above, sufficiently high powder fluidity of the vinyl chloride resin composition and low-temperature tensile elongation of a formed vinyl chloride resin molded product can be ensured, and sufficiently good external appearance of the vinyl chloride resin molded product can also be preserved. Furthermore, when the content of the starch in the vinyl chloride resin composition is within the specific range set forth above, reduction of low-temperature tensile elongation between before and after heating of a formed vinyl chloride resin molded product can be suppressed, and gloss change between before and after heating of the vinyl chloride resin molded product can also be sufficiently suppressed.

[5] In the vinyl chloride resin composition according to any one of the foregoing [1] to [4], content of the plasticizer is preferably not less than 30 parts by mass and not more than 200 parts by mass relative to 100 parts by mass of the vinyl chloride resin. When the content of the plasticizer in the vinyl chloride resin composition is within the specific range set forth above, this enables good molding (particularly powder molding) of the vinyl chloride resin composition and can also improve powder fluidity of the vinyl chloride resin composition. Moreover, when the content of the plasticizer in the vinyl chloride resin composition is within the specific range set forth above, low-temperature tensile elongation of a formed vinyl chloride resin molded product can be improved while also further suppressing tear fusion of the vinyl chloride resin molded product. Furthermore, when the content of the plasticizer in the vinyl chloride resin composition is within the specific range set forth above, this means that in a situation in which a formed vinyl chloride resin molded product is lined with a foamed polyurethane molded product to form a laminate, it is possible to suppress heat shrinkage of the vinyl chloride resin molded product caused by the plasticizer in the vinyl chloride resin molded product migrating to the foamed polyurethane molded product at high temperature. In other words, heat shrinkage resistance of a formed vinyl chloride resin molded product can be improved when the content of the plasticizer in the vinyl chloride resin composition is within the specific range set forth above.

[6] In the vinyl chloride resin composition according to any one of the foregoing [1] to [5], the plasticizer preferably includes a polyester. By using a polyester as the plasticizer, it is possible to improve heat shrinkage resistance of a formed vinyl chloride resin molded product.

[7] In the vinyl chloride resin composition according to the foregoing [6], content of the polyester is preferably not less than 30 parts by mass and not more than 200 parts by mass relative to 100 parts by mass of the vinyl chloride resin. When the content of the polyester in the vinyl chloride resin composition is within the specific range set forth above, heat shrinkage resistance of a formed vinyl chloride resin molded product can be further improved while also further suppressing tear fusion of the vinyl chloride resin molded product.

[8] The vinyl chloride resin composition according to any one of the foregoing [1] to [7] is preferably used in powder molding. By using the vinyl chloride resin composition in powder molding, it is easy to obtain a vinyl chloride resin molded product that can be used well as an automobile interior material such as a surface skin for an automobile instrument panel, for example.

[9] The vinyl chloride resin composition according to any one of the foregoing [1] to [8] is preferably used in powder slush molding. By using the vinyl chloride resin composition in powder slush molding, it is even easier to obtain a vinyl chloride resin molded product that can be used well as an automobile interior material such as a surface skin for an automobile instrument panel, for example.

Moreover, with the aim of advantageously solving the problem set forth above, [10] a presently disclosed vinyl chloride resin molded product is obtained through molding of the vinyl chloride resin composition according to any one of the foregoing [1] to [9]. A vinyl chloride resin molded product that is obtained through molding of the vinyl chloride resin composition set forth above has suppressed tear fusion.

[11] The vinyl chloride resin molded product according to the foregoing [10] is preferably for a surface skin of an automobile interior component. This is because by using the vinyl chloride resin molded product as a surface skin of an automobile interior component, it is possible to produce an automobile interior component, such as an automobile instrument panel, having a surface skin part the can rupture well upon expansion of an airbag.

Furthermore, with the aim of advantageously solving the problem set forth above, [12] a presently disclosed laminate comprises: a foamed polyurethane molded product; and the vinyl chloride resin molded product according to the foregoing [10] or [11]. A laminate that includes a foamed polyurethane molded product and the vinyl chloride resin molded product set forth above can suitably be used as an automobile interior material that is used to produce an automobile interior component, such as an automobile instrument panel, having a surface skin part that can rupture well upon expansion of an airbag.

### (Advantageous Effect)

According to the present disclosure, it is possible to provide a vinyl chloride resin composition that is capable of forming a vinyl chloride resin molded product in which tear fusion is suppressed.

Moreover, according to the present disclosure, it is possible to provide a vinyl chloride resin molded product in which tear fusion is suppressed.

Furthermore, according to the present disclosure, it is possible to provide a laminate including this vinyl chloride resin molded product.

### DETAILED DESCRIPTION

The following provides a detailed description of embodiments of the present disclosure.

The presently disclosed vinyl chloride resin composition can be used, for example, in formation of the presently disclosed vinyl chloride resin molded product. Moreover, a vinyl chloride resin molded product formed using the presently disclosed vinyl chloride resin composition can suitably be used, for example, as an automobile interior material such as a surface skin included in an automobile interior component such as an automobile instrument panel or a door trim.

The presently disclosed vinyl chloride resin molded product can be used, for example, in formation of the presently disclosed laminate. Moreover, a laminate formed using the presently disclosed vinyl chloride resin molded product can suitably be used, for example, as an automobile interior material used in production of an automobile interior component such as an automobile instrument panel or a door trim.

### (Vinyl chloride resin composition)

The presently disclosed vinyl chloride resin composition contains: (a) a vinyl chloride resin; (b) a plasticizer; and (c) starch, and may optionally further contain additives. Moreover, the presently disclosed vinyl chloride resin composition can suppress tear fusion of a formed vinyl chloride resin molded product as a result of containing at least the (a) vinyl chloride resin, the (b) plasticizer, and the (c) starch. Consequently, by using the presently disclosed vinyl chloride resin composition, it is possible to obtain a vinyl chloride resin molded product that is suitable as an automobile interior material, such as a surface skin for an automobile instrument panel, that can rupture well upon expansion of an airbag, for example.

Note that from a viewpoint of easily obtaining a vinyl chloride resin molded product that can favorably be used as an automobile interior material using the presently disclosed vinyl chloride resin composition, for example, the presently disclosed vinyl chloride resin composition is preferably used in powder molding, and is more preferably used in powder slush molding.

### <(a) Vinyl chloride resin>

A particulate vinyl chloride resin is normally used as the (a) vinyl chloride resin. For example, one type or two or more types of vinyl chloride resin particles can be included as the (a) vinyl chloride resin, and one type or two or more types of vinyl chloride resin fine particles can optionally be further included as the (a) vinyl chloride resin. In particular, the (a) vinyl chloride resin preferably includes at least vinyl chloride resin particles, and more preferably includes vinyl chloride resin particles and vinyl chloride resin fine particles.

The (a) vinyl chloride resin can be produced by a conventionally known production method such as suspension polymerization, emulsion polymerization, solution polymerization, or bulk polymerization.

In the present specification, the term "resin particles" is used to refer to particles having a particle diameter of 30 µm or more, whereas the term "resin fine particles" is used to refer to particles having a particle diameter of less than 30 µm.

Examples of the (a) vinyl chloride resin include homopolymers composed of vinyl chloride monomer units and vinyl chloride copolymers preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride copolymer include monomers described in WO2016/098344A1, for example. One of these components may be used individually, or two or more of these components may be used in combination in a freely selected ratio.

### <<Vinyl chloride resin particles>>

In the vinyl chloride resin composition, the vinyl chloride resin particles normally function as a matrix resin (base material). The vinyl chloride resin particles are preferably produced by suspension polymerization.

### [Average degree of polymerization]

The average degree of polymerization of a vinyl chloride resin forming the vinyl chloride resin particles is preferably 800 or more, and more preferably 900 or more, and is preferably 5,000 or less, more preferably 3,000 or less, and even more preferably 2,800 or less. When the average degree of polymerization of the vinyl chloride resin forming the vinyl chloride resin particles is not less than any of the lower limits set forth above, sufficiently high physical strength of a vinyl chloride resin molded product formed using the vinyl chloride resin composition can be ensured while also improving tensile characteristics (particularly tensile elongation) of the vinyl chloride resin molded product, for example. A vinyl chloride resin molded product having good tensile elongation can suitably be used as an automobile interior material, such as a surface skin of an automobile instrument panel, that has excellent ductility and that ruptures as designed without scattering of fragments when an airbag expands and is deployed, for example. On the other hand, when the average degree of polymerization of the vinyl chloride resin forming the vinyl chloride resin particles is not more than any of the upper limits set forth above, meltability of the vinyl chloride resin composition can be improved.

The "average degree of polymerization" referred to in the present disclosure can be measured in accordance with JIS K6720-2.

### [Average particle diameter]

The average particle diameter of the vinyl chloride resin particles is normally 30 µm or more, preferably 50 µm or more, and more preferably 100 µm or more, and is preferably 500 µm or less, and more preferably 200 µm or less. When the average particle diameter of the vinyl chloride resin particles is not less than any of the lower limits set forth above, powder fluidity of the vinyl chloride resin composition can be improved. On the other hand, when the average particle diameter of the vinyl chloride resin particles is not more than any of the upper limits set forth above, meltability of the vinyl chloride resin composition can be improved, and surface smoothness of a vinyl chloride resin molded product formed using the vinyl chloride resin composition can be improved.

The "average particle diameter" referred to in the present disclosure can be measured as the volume-average particle diameter by laser diffraction in accordance with JIS Z8825.

### [Proportional content]

The proportional content of the vinyl chloride resin particles in the (a) vinyl chloride resin is preferably 70 mass% or more, and more preferably 80 mass% or more, can be set as 100 mass%, and is preferably 95 mass% or less, and more preferably 90 mass% or less. When the proportional content of the vinyl chloride resin particles in the (a) vinyl chloride resin is not less than any of the lower limits set forth above, physical strength of a vinyl chloride resin molded product formed using the vinyl chloride resin composition can be sufficiently ensured while also improving tensile elongation of the vinyl chloride resin molded product. Moreover, when the proportional content of the vinyl chloride resin particles in the (a) vinyl chloride resin is not more than any of the upper limits set forth above, powder fluidity of the vinyl chloride resin composition can be improved.

### <<Vinyl chloride resin fine particles>>

In the vinyl chloride resin composition, the vinyl chloride resin fine particles normally function as a dusting agent (powder fluidity modifier). The vinyl chloride resin fine particles are preferably produced by emulsion polymerization.

### [Average degree of polymerization]

The average degree of polymerization of a vinyl chloride resin forming the vinyl chloride resin fine particles is preferably 500 or more, and more preferably 700 or more, and is preferably 2,600 or less, and more preferably 2,400 or less. When the average degree of polymerization of the vinyl chloride resin forming the vinyl chloride resin fine particles that serve as a dusting agent is not less than any of the lower limits set forth above, powder fluidity of the vinyl chloride resin composition can be improved, and tensile elongation of a vinyl chloride resin molded product formed using the vinyl chloride resin composition can also be improved. On the other hand, when the average degree of polymerization of the vinyl chloride resin forming the vinyl chloride resin fine particles is not more than any of the upper limits set forth above, meltability of the vinyl chloride resin composition can be improved, and surface smoothness of a vinyl chloride resin molded product formed using the vinyl chloride resin composition can be improved.

### [Average particle diameter]

The average particle diameter of the vinyl chloride resin fine particles is normally less than 30 µm, preferably 10 µm or less, and more preferably 5 µm or less, and is preferably 0.1 µm or more, and more preferably 1 µm or more. When the average particle diameter of the vinyl chloride resin fine particles is not less than any of the lower limits set forth above, the vinyl chloride resin fine particles are not too small to function as a dusting agent, for example, and powder fluidity of the vinyl chloride resin composition can be improved. On the other hand, when the average particle diameter of the vinyl chloride resin fine particles is not more than any of the upper limits set forth above, meltability of the vinyl chloride resin composition can be improved, and surface smoothness of a vinyl chloride resin molded product formed using the vinyl chloride resin composition can be improved.

### [Proportional content]

The proportional content of the vinyl chloride resin fine particles in the (a) vinyl chloride resin may be 0 mass%, but is preferably 5 mass% or more, and more preferably 10 mass% or more, and is preferably 30 mass% or less, and more preferably 20 mass% or less. When the proportional content of the vinyl chloride resin fine particles in the (a) vinyl chloride resin is not less than any of the lower limits set forth above, powder fluidity of the vinyl chloride resin composition can be improved. On the other hand, when the proportional content of the vinyl chloride resin fine particles in the (a) vinyl chloride resin is not more than any of the upper limits set forth above, physical strength of a vinyl chloride resin molded product formed using the vinyl chloride resin composition can be increased.

### <(b) Plasticizer>

The (b) plasticizer is a component that can impart sufficient flexibility to a vinyl chloride resin molded product formed using the vinyl chloride resin composition.

### <<Content>>

The content of the (b) plasticizer in the vinyl chloride resin composition is preferably 30 parts by mass or more, more preferably 50 parts by mass or more, even more preferably 70 parts by mass or more, further preferably 80 parts by mass or more, even further preferably 90 parts by mass or more, and particularly preferably 100 parts by mass or more relative to 100 parts by mass of the vinyl chloride resin, and is preferably 200 parts by mass or less, more preferably 150 parts by mass or less, even more preferably 120 parts by mass or less, further preferably 115 parts by mass or less, and even further preferably 110 parts by mass or less relative to 100 parts by mass of the vinyl chloride resin. When the content of the (b) plasticizer in the vinyl chloride resin composition is not less than any of the lower limits set forth above, this enables good molding (particularly powder molding) of the vinyl chloride resin composition. Moreover, when the content of the (b) plasticizer in the vinyl chloride resin composition is within any of the specific ranges set forth above, powder fluidity of the vinyl chloride resin composition and low-temperature tensile elongation and heat shrinkage resistance of a formed vinyl chloride resin molded product can be improved while also further suppressing tear fusion of the vinyl chloride resin molded product.

### <<Type>>

Primary plasticizers, secondary plasticizers, and so forth described in WO2016/098344A1, for example, can be used as the (b) plasticizer. One of these components may be used individually, or two or more of these components may be used in combination in a freely selected ratio.

Of the above-described plasticizers, it is preferable that at least a primary plasticizer is used as the (b) plasticizer from a viewpoint of improving low-temperature tensile elongation of a formed vinyl chloride resin molded product, and more preferable that a primary plasticizer and a secondary plasticizer are used together as the (b) plasticizer.

Moreover, it is preferable that at least (b1) a polyester is used as the (b) plasticizer from a viewpoint of improving heat shrinkage resistance of a formed vinyl chloride resin molded product, and it is more preferable that (b1) a polyester and (b2) a trimellitic acid ester are used together as the (b) plasticizer from a viewpoint of enabling a balance of high levels of both low-temperature tensile elongation and heat shrinkage resistance of the vinyl chloride resin molded product.

### -(b1) Polyester-

By using (b1) a polyester as the (b) plasticizer, it is possible to improve heat shrinkage resistance of a formed vinyl chloride resin molded product.

In general, when a vinyl chloride resin molded product having an incision formed in the surface thereof is placed under high temperature and undergoes heat shrinkage, this heat shrinkage is accompanied by opening of the incision, which makes tear fusion less likely to occur. In contrast, in a case in which (b1) a polyester is used as the (b) plasticizer, this results in a formed vinyl chloride resin molded product having excellent heat shrinkage resistance and low tendency to undergo heat shrinkage at high temperature, which is thought to inhibit opening of an incision (tear) formed in the surface of the vinyl chloride resin molded product and thus facilitate tear fusion. However, as a result of the (c) starch being used in the presently disclosed vinyl chloride resin composition, it is possible to sufficiently suppress tear fusion of a formed vinyl chloride resin molded product even in a case in which (b1) a polyester is used as the (b) plasticizer. In other words, as a result of the (b1) polyester and the (c) starch being used together in the presently disclosed vinyl chloride resin composition, it is possible to improve heat shrinkage resistance of a formed vinyl chloride resin molded product while also suppressing tear fusion of the vinyl chloride resin molded product.

A polyester such as a polyester including a structural unit derived from adipic acid (adipic acid polyester), a polyester including a structural unit derived from sebacic acid (sebacic acid polyester), or a polyester including a structural unit derived from phthalic acid (phthalic acid polyester) can be used without any specific limitations as the (b1) polyester that can be included in the (b) plasticizer. Note that one of these polyesters may be used individually, or two or more of these polyesters may be used as a mixture in a freely selected ratio.

Moreover, from a viewpoint of further improving low-temperature tensile elongation and heat shrinkage resistance of a formed vinyl chloride resin molded product, it is preferable to use a polyester that includes a structural unit derived from adipic acid (adipic acid polyester) as the (b1) polyester.

The proportional content of the (b1) polyester in the (b) plasticizer is preferably 50 mass% or more, more preferably 60 mass% or more, even more preferably 70 mass% or more, and further preferably 80 mass% or more, and is preferably 99 mass% or less, more preferably 95 mass% or less, and even more preferably 90 mass% or less. When the proportional content of the (b1) polyester in the (b) plasticizer is not less than any of the lower limits set forth above, heat shrinkage resistance of a formed vinyl chloride resin molded product can be further improved. On the other hand, when the proportional content of the (b1) polyester in the (b) plasticizer is not more than any of the upper limits set forth above, tear fusion of a formed vinyl chloride resin molded product can be further suppressed.

Note that the proportional content of the (b1) polyester in the (b) plasticizer can be set as 100 mass% or less.

The content of the (b1) polyester in the vinyl chloride resin composition is preferably 30 parts by mass or more, more preferably 50 parts by mass or more, even more preferably 70 parts by mass or more, further preferably 80 parts by mass or more, and even further preferably 90 parts by mass or more relative to 100 parts by mass of the (a) vinyl chloride resin, and is preferably 200 parts by mass or less, more preferably 150 parts by mass or less, even more preferably 120 parts by mass or less, further preferably 110 parts by mass or less, and even further preferably 100 parts by mass or less relative to 100 parts by mass of the (a) vinyl chloride resin. When the content of the (b1) polyester in the vinyl chloride resin composition is not less than any of the lower limits set forth above, heat shrinkage resistance of a formed vinyl chloride resin molded product can be further improved. On the other hand, when the proportional content of the (b1) polyester in vinyl chloride resin composition is not more than any of the upper limits set forth above, tear fusion of a formed vinyl chloride resin molded product can be further suppressed.

### -(b2) Trimellitic acid ester-

The (b2) trimellitic acid ester that can be included in the (b) plasticizer is preferably an ester compound of trimellitic acid and a monohydric alcohol.

Specific examples of the monohydric alcohol include, but are not specifically limited to, aliphatic alcohols such as 1-hexanol, 1-heptanol, 1-octanol, 2-ethylhexanol, 1-nonanol, 1-decanol, 1-undecanol, and 1-dodecanol. Of these examples, an aliphatic alcohol having a carbon number of 6 to 18 is preferable, and a linear aliphatic alcohol having a carbon number of 6 to 18 is more preferable as the monohydric alcohol.

In particular, the (b2) trimellitic acid ester is preferably a triester compound in which substantially all the carboxy groups of trimellitic acid are esterified with the monohydric alcohol described above. Alcohol residue portions of the triester compound may all be derived from the same alcohol or may each be derived from a different alcohol.

The (b2) trimellitic acid ester may be composed of a single compound or may be a mixture of different compounds.

Specific examples of suitable (b2) trimellitic acid esters include tri-n-hexyl trimellitate, tri-n-heptyl trimellitate, tri-n-octyl trimellitate, tri(2-ethylhexyl) trimellitate, tri-n-nonyl trimellitate, tri-n-decyl trimellitate, triisodecyl trimellitate, tri-n-undecyl trimellitate, tri-n-dodecyl trimellitate, trimellitic acid trialkyl esters (esters including two or more types of alkyl groups having different carbon numbers (with a proviso that the carbon number is 6 to 18) in a molecule), trimellitic acid tri-n-alkyl esters (esters including two or more types of alkyl groups having different carbon numbers (with a proviso that the carbon number is 6 to 18) in a molecule), and mixtures thereof.

Specific examples of more preferable (b2) trimellitic acid esters include tri-n-octyl trimellitate, tri(2-ethylhexyl) trimellitate, tri-n-nonyl trimellitate, tri-n-decyl trimellitate, trimellitic acid tri-n-alkyl esters (esters including two or more types of alkyl groups having different carbon numbers (with a proviso that the carbon number is 6 to 18) in a molecule), and mixtures thereof.

The proportional content of the (b2) trimellitic acid ester in the (b) plasticizer is preferably 1 mass% or more, more preferably 5 mass% or more, and even more preferably 10 mass% or more, and is preferably 45 mass% or less, more preferably 40 mass% or less, even more preferably 30 mass% or less, and further preferably 20 mass% or less. When the proportional content of the (b2) trimellitic acid ester in the (b) plasticizer is not less than any of the lower limits set forth above, low-temperature tensile elongation of a formed vinyl chloride resin molded product can be further improved, and tear fusion of the vinyl chloride resin molded product can also be further suppressed. On the other hand, when the proportional content of the (b2) trimellitic acid ester in the (b) plasticizer is not more than any of the upper limits set forth above, sufficiently high heat shrinkage resistance of a formed vinyl chloride resin molded product can be ensured.

Note that the proportional content of the (b2) trimellitic acid ester in the (b) plasticizer can be set as 0 mass% or more. Moreover, the proportional content of the (b2) trimellitic acid ester in the (b) plasticizer can be set as 10 mass% or less.

The content of the (b2) trimellitic acid ester in the vinyl chloride resin composition can be set as 0 parts by mass or more, is preferably 1 part by mass or more, more preferably 5 parts by mass or more, and even more preferably 10 parts by mass or more relative to 100 parts by mass of the (a) vinyl chloride resin, and is preferably 30 parts by mass or less, more preferably 20 parts by mass or less, and even more preferably 15 parts by mass or less relative to 100 parts by mass of the (a) vinyl chloride resin. When the content of the (b2) trimellitic acid ester in the vinyl chloride resin composition is not less than any of the lower limits set forth above, low-temperature tensile elongation of a formed vinyl chloride resin molded product can be further improved, and tear fusion of the vinyl chloride resin molded product can also be further suppressed. On the other hand, when the content of the (b2) trimellitic acid ester in the vinyl chloride resin composition is not more than any of the upper limits set forth above, sufficiently high heat shrinkage resistance of a formed vinyl chloride resin molded product can be ensured.

Note that the content of the (b2) trimellitic acid ester in the vinyl chloride resin composition can be set as 10 parts by mass or less relative to 100 parts by mass of the (a) vinyl chloride resin.

### -(b3) Other plasticizers-

The (b) plasticizer that is contained in the vinyl chloride resin composition may optionally further include plasticizers other than the (b1) polyester and the (b2) trimellitic acid ester described above (hereinafter, also referred to as "(b3) other plasticizers").

Specific examples of (b3) other plasticizers include primary plasticizers other than the (b1) polyester and the (b2) trimellitic acid ester described above, secondary plasticizers, and so forth among plasticizers that are described in WO2016/098344A1.

In particular, it is preferable to use epoxidized vegetable oil from a viewpoint of further enhancing tensile characteristics (particularly tensile elongation) of a formed vinyl chloride resin molded product, and more preferable to use epoxidized soybean oil.

The proportional content of the (b3) other plasticizers in the (b) plasticizer is not specifically limited and can be set as not less than 0 mass% and not more than 5 mass%, for example.

Moreover, the content of the (b3) other plasticizers in the vinyl chloride resin composition is not specifically limited and can be set as not less than 0 parts by mass and not more than 5 parts by mass relative to 100 parts by mass of the (a) vinyl chloride resin, for example.

### <(c) Starch>

The (c) starch is a component that can suppress tear fusion of a formed vinyl chloride resin molded product.

Rice starch, wheat starch, corn starch, potato starch, sweet potato starch, mung bean starch, tapioca starch, sago starch, or the like can be used as the (c) starch without any specific limitations. Note that one of these starches may be used individually, or two or more of these starches may be used as a mixture in a freely selected ratio.

In particular, rice starch, corn starch, and potato starch are preferable, and corn starch is more preferable in terms of having a desired volume-average particle diameter that is described further below.

Note that unmodified starch may be used as the (c) starch, or modified starch such as oxidized starch, etherified starch, esterified starch, cationic starch, cross-linked starch, or gelatinized starch may be used as the (c) starch.

Although no specific limitations are made, particulate starch can be used as the (c) starch.

The volume-average particle diameter of the (c) starch is preferably 0.1 µm or more, more preferably 1 µm or more, even more preferably 2 µm or more, further preferably 4 µm or more, even further preferably 8 µm or more, and particularly preferably 12 µm or more, and is preferably 200 µm or less, more preferably 100 µm or less, even more preferably 75 µm or less, further preferably 50 µm or less, even further preferably 30 µm or less, and particularly preferably 20 µm or less. When the volume-average particle diameter of the (c) starch is not less than any of the lower limits set forth above, tear fusion of a formed vinyl chloride resin molded product can be further suppressed. Moreover, when the volume-average particle diameter of the (c) starch is not less than any of the lower limits set forth above, gloss change between before and after heating of a formed vinyl chloride resin molded product can be sufficiently suppressed. Furthermore, when the volume-average particle diameter of the (c) starch is not less than any of the lower limits set forth above, sufficiently high low-temperature tensile elongation of a formed vinyl chloride resin molded product can be ensured. On the other hand, when the volume-average particle diameter of the (c) starch is not more than any of the upper limits set forth above, the formation of irregularities at the surface of a formed vinyl chloride resin molded product can be suppressed, and sufficiently good external appearance of the vinyl chloride resin molded product can be preserved. Moreover, when the volume-average particle diameter of the (c) starch is not more than any of the upper limits set forth above, tear fusion of a formed vinyl chloride resin molded product can be further suppressed. Furthermore, when the volume-average particle diameter of the (c) starch is not more than any of the upper limits set forth above, gloss change between before and after heating of a formed vinyl chloride resin molded product can be sufficiently suppressed, and reduction of low-temperature tensile elongation between before and after heating of the vinyl chloride resin molded product can also be suppressed.

Note that the volume-average particle diameter of the (c) starch may be 15 µm or less, may be 12 µm or less, may be 8 µm or less, may be 4 µm or less, may be 3 µm or less, or may be 2.5 µm or less.

The content of the (c) starch in the vinyl chloride resin composition is preferably 1 part by mass or more, more preferably 2 parts by mass or more, even more preferably 3 parts by mass or more, further preferably 5 parts by mass or more, even further preferably 6 parts by mass or more, and particularly preferably 8 parts by mass or more relative to 100 parts by mass of the (a) vinyl chloride resin, and is preferably 30 parts by mass or less, more preferably 20 parts by mass or less, even more preferably 18 parts by mass or less, further preferably 15 parts by mass or less, even further preferably 12 parts by mass or less, and particularly preferably 10 parts by mass or less relative to 100 parts by mass of the (a) vinyl chloride resin. When the content of the (c) starch in the vinyl chloride resin composition is not less than any of the lower limits set forth above, tear fusion of a formed vinyl chloride resin molded product can be further suppressed. On the other hand, when the content of the (c) starch in the vinyl chloride resin composition is not more than any of the upper limits set forth above, sufficiently high powder fluidity of the vinyl chloride resin composition and low-temperature tensile elongation of a formed vinyl chloride resin molded product can be ensured, and sufficiently good external appearance of the vinyl chloride resin molded product can also be preserved. Furthermore, when the content of the (c) starch in the vinyl chloride resin composition is within any of the specific ranges set forth above, reduction of low-temperature tensile elongation between before and after heating of a formed vinyl chloride resin molded product can be suppressed, and gloss change between before and after heating of the vinyl chloride resin molded product can also be sufficiently suppressed.

Also note that the content of the (c) starch in the vinyl chloride resin composition may be 9 parts by mass or less, may be 8 parts by mass or less, may be 6 parts by mass or less, may be 5 parts by mass or less, may be 4 parts by mass or less, may be 3 parts by mass or less, or may be 2 parts by mass or less relative to 100 parts by mass of the (a) vinyl chloride resin.

The content of the (c) starch in the vinyl chloride resin composition is preferably 1 part by mass or more, more preferably 2 parts by mass or more, even more preferably 3 parts by mass or more, further preferably 5 parts by mass or more, even further preferably 6 parts by mass or more, and particularly preferably 8 parts by mass or more relative to 100 parts by mass of the (b) plasticizer, and is preferably 30 parts by mass or less, more preferably 20 parts by mass or less, even more preferably 18 parts by mass or less, further preferably 15 parts by mass or less, even further preferably 12 parts by mass or less, and particularly preferably 10 parts by mass or less relative to 100 parts by mass of the (b) plasticizer. When the content of the (c) starch in the vinyl chloride resin composition is not less than any of the lower limits set forth above, tear fusion of a formed vinyl chloride resin molded product can be further suppressed. On the other hand, when the content of the (c) starch in the vinyl chloride resin composition is not more than any of the upper limits set forth above, sufficiently high powder fluidity of the vinyl chloride resin composition and low-temperature tensile elongation of a formed vinyl chloride resin molded product can be ensured, and sufficiently good external appearance of the vinyl chloride resin molded product can also be preserved. Furthermore, when the content of the (c) starch in the vinyl chloride resin composition is within any of the specific ranges set forth above, reduction of low-temperature tensile elongation between before and after heating of a formed vinyl chloride resin molded product can be suppressed, and gloss change between before and after heating of the vinyl chloride resin molded product can also be sufficiently suppressed.

Also note that the content of the (c) starch in the vinyl chloride resin composition may be 9 parts by mass or less, may be 8 parts by mass or less, may be 6 parts by mass or less, may be 5 parts by mass or less, may be 4 parts by mass or less, may be 3 parts by mass or less, or may be 2 parts by mass or less relative to 100 parts by mass of the (b) plasticizer.

### <Additives>

The presently disclosed vinyl chloride resin composition may further contain various additives besides the components set forth above. Examples of additives that may be used include, but are not specifically limited to, lubricants; stabilizers such as perchloric acid-treated hydrotalcite, zeolites, β-diketones, and fatty acid metal salts; mold release agents; dusting agents other than the previously described vinyl chloride resin fine particles; impact modifiers; perchloric acid compounds other than perchloric acid-treated hydrotalcite (sodium perchlorate, potassium perchlorate, etc.); antioxidants; fungicides; flame retardants; antistatic agents; fillers; light stabilizers; foaming agents; and pigments.

Additives that are described in WO2016/098344A1, for example, can be used as the aforementioned additives that can be contained in the presently disclosed vinyl chloride resin composition, and suitable amounts of these additives can also be the same as described in WO2016/098344A1.

### <<Amide compound>>

The presently disclosed vinyl chloride resin composition may contain an amide compound as an additive. The further inclusion of an amide compound in the vinyl chloride resin composition makes it possible to improve demolding ability of a formed vinyl chloride resin molded product.

The amide compound is a compound that includes an amide group and may, for example, be indicated by the following formula (1).

R¹(NR²COR³)ₙ (1)

[In formula (1), n is an integer of not less than 2 and not more than 6, R¹ is an n-valent hydrocarbon group, R² is a monovalent hydrocarbon group or hydrogen, R³ is a monovalent hydrocarbon group, the n-number of R² may be the same as or different from one another, and the n-number of R³ may be the same as or different from one another.] In other words, the amide compound may, for example, have a structure resulting from the n-number of hydrogens of a hydrocarbon each being replaced by an amide group indicated by -NR²COR³.

In formula (1), n is an integer of not less than 2 and not more than 6, and may be an integer of not less than 2 and not more than 3, or may be 2, for example.

Moreover, R¹ in formula (1) is an n-valent hydrocarbon group and may be an n-valent aliphatic hydrocarbon group or may be an n-valent aromatic hydrocarbon group.

Moreover, the number of carbons in R¹ may be 1 or more, may be 2 or more, may be 8 or less, or may be 6 or less, for example.

R¹ may, for example, be a methylene group, a methylmethylene group, an ethylene group (dimethylene group), a dimethylmethylene group, an isopropylene group, a trimethylene group, an isobutylene group, a tetramethylene group, a hexamethylene group, or the like.

Moreover, R² in formula (1) is a monovalent hydrocarbon group or hydrogen, and the n-number of R² may be the same as or different from one another. The monovalent hydrocarbon group of R² may be a monovalent aliphatic hydrocarbon group or may be a monovalent aromatic hydrocarbon group. The monovalent aliphatic hydrocarbon group may, for example, be a monovalent chain-type aliphatic hydrocarbon group. Moreover, the monovalent aliphatic hydrocarbon group may be a saturated aliphatic hydrocarbon group or may be an unsaturated aliphatic hydrocarbon group.

Furthermore, the number of carbons in the hydrocarbon group of R² may be not less than 1 and not more than 2, for example.

R² may, for example, be hydrogen, a methyl group, or an ethyl group.

At least one of the n-number of R² may be hydrogen, or all of the n-number of R² may be hydrogen.

R³ in formula (1) is a monovalent hydrocarbon group, and the n-number of R³ may be the same as or different from one another. In other words, a saturated hydrocarbon group of R³ and an unsaturated hydrocarbon group of R³ may be present together in a single molecule of the (e) amide compound, just an unsaturated hydrocarbon group of R³ may be present in a single molecule of the (e) amide compound, or just a saturated hydrocarbon group of R³ may be present in a single molecule of (e) the amide compound.

The saturated hydrocarbon group of R³ may be a monovalent chain-type saturated aliphatic hydrocarbon group, for example.

Moreover, the number of carbons in the saturated hydrocarbon group of R³ may be 11 or more, may be 13 or more, may be 15 or more, may be 23 or less, may be 21 or less, may be 19 or less, or may be 17.

The saturated hydrocarbon group of R³ may, for example, be CH₃(CH₂)₁₀-, CH₃(CH₂)₁₂-, CH₃(CH₂)₁₄-, CH₃(CH₂)₁₆-, CH₃(CH₂)₁₈-, CH₃(CH₂)₂₀-, CH₃(CH₂)₂₂-, or the like.

The unsaturated hydrocarbon group of R³ may be a monovalent chain-type unsaturated aliphatic hydrocarbon group, for example.

Moreover, the number of carbons included in the unsaturated hydrocarbon group of R³ may be 11 or more, may be 13 or more, may be 15 or more, may be 23 or less, may be 21 or less, may be 19 or less, or may be 17.

The unsaturated hydrocarbon group of R³ may, for example, be an unsaturated hydrocarbon group that includes a carbon-carbon double bond such as a mono-unsaturated hydrocarbon group (CH₃(CH₂)₇CH=CH(CH₂)₇-, CH₃(CH₂)₇CH=CH(CH₂)₁₁-, etc.), a di-unsaturated hydrocarbon group (CH₃(CH₂)₄(CH=CHCH₂)₂(CH₂)₆-, etc.), a tri-unsaturated hydrocarbon group (CH₃CH₂(CH=CHCH₂)₃(CH₂)₆-, etc.), a tetra-unsaturated hydrocarbon group, a penta-unsaturated hydrocarbon group, or a hexa-unsaturated hydrocarbon group; or an unsaturated hydrocarbon group that includes a carbon-carbon triple bond.

More specifically, the amide compound may, for example, be ethylene bisoleamide (particularly dimethylene bisoleamide), ethylene biserucamide, hexamethylene bisoleamide, ethylene bislauramide, ethylene bisstearamide (particularly dimethylene bisstearamide), ethylene bispalmitamide, hexamethylene bisstearamide, or the like.

The content of the amide compound in the vinyl chloride resin composition may be 0 parts by mass, may be 0.1 parts by mass or more, may be 0.25 parts by mass or more, may be 1.5 parts by mass or less, may be 1.25 parts by mass or less, or may be 1 part by mass or less relative to 100 parts by mass of the (a) vinyl chloride resin.

Moreover, the content of the amide compound in the vinyl chloride resin composition may be 0 parts by mass, may be 0.1 parts by mass or more, may be 0.25 parts by mass or more, may be 1.5 parts by mass or less, may be 1.25 parts by mass or less, or may be 1 part by mass or less relative to 100 parts by mass of the (b) plasticizer.

It may of course alternatively be the case that the presently disclosed vinyl chloride resin composition does not contain an amide compound.

### <Production method of vinyl chloride resin composition>

The presently disclosed vinyl chloride resin composition can be produced by mixing the components described above.

The mixing method of the above-described (a) vinyl chloride resin, (b) plasticizer, (c) starch, and various additives that are further compounded as necessary may be a method in which components other than a dusting agent (inclusive of vinyl chloride resin fine particles) are mixed by dry blending and then the dusting agent is subsequently added and mixed, for example, but is not specifically limited thereto. The dry blending is preferably carried out using a Henschel mixer. Although the temperature during dry blending is not specifically limited, the temperature is preferably 50°C or higher, and more preferably 70°C or higher, and is preferably 200°C or lower.

### <Use of vinyl chloride resin composition>

The obtained vinyl chloride resin composition can suitably be used in powder molding, and can more suitably be used in powder slush molding.

### (Vinyl chloride resin molded product)

A feature of the presently disclosed vinyl chloride resin molded product is that it is obtained by molding the vinyl chloride resin composition set forth above by any method. As a result of the presently disclosed vinyl chloride resin molded product being formed using the vinyl chloride resin composition set forth above, the presently disclosed vinyl chloride resin molded product normally contains at least the (a) vinyl chloride resin, the (b) plasticizer, and the (c) starch and has suppressed tear fusion in a situation in which an incision is formed in the surface thereof.

Moreover, the presently disclosed vinyl chloride resin molded product can suitably be used to produce a surface skin of an automobile interior component, and, in particular, can suitably be used to produce a surface skin of an automobile instrument panel into which an airbag is incorporated. Since the presently disclosed vinyl chloride resin molded product can suppress tear fusion in a situation in which an incision (tear) is formed in the surface thereof, the presently disclosed vinyl chloride resin molded product can be used as a surface skin of an automobile instrument panel that can rupture well upon expansion of an airbag and that has excellent safety.

### <Formation method of vinyl chloride resin molded product>

Although no specific limitations are placed on the mold temperature in powder slush molding in a situation in which the vinyl chloride resin molded product is formed by powder slush molding, the mold temperature is preferably 200°C or higher, and more preferably 220°C or higher, and is preferably 300°C or lower, and more preferably 280°C or lower.

The following method, for example, may be used in production of the vinyl chloride resin molded product without any specific limitations. In this method, the presently disclosed vinyl chloride resin composition is sprinkled onto a mold having a temperature within any of the ranges set forth above. The vinyl chloride resin composition is initially left for not less than 5 seconds and not more than 30 seconds and, after shaking off any excess vinyl chloride resin composition, is then further left for not less than 30 seconds and not more than 3 minutes at an arbitrary temperature. The mold is subsequently cooled to a temperature of not lower than 10°C and not higher than 60°C, and the presently disclosed vinyl chloride resin molded product that is obtained is removed from the mold. A sheet-shaped molded product that imitates the shape of the mold is obtained.

### (Laminate)

The presently disclosed laminate includes a foamed polyurethane molded product and the vinyl chloride resin molded product set forth above. The vinyl chloride resin molded product typically constitutes one surface of the laminate.

Moreover, the presently disclosed laminate is formed using the presently disclosed vinyl chloride resin composition and includes a vinyl chloride resin molded product in which tear fusion is suppressed, for example. Therefore, the presently disclosed laminate can suitably be used as an automobile interior material forming an automobile interior component such as an automobile instrument panel or door trim, for example, and can particularly suitably be used as an automobile interior material forming an automobile instrument panel in which an airbag is incorporated.

The method by which the foamed polyurethane molded product and the vinyl chloride resin molded product are stacked is not specifically limited and may, for example, be a method such as described below. Specifically, (1) a method in which the foamed polyurethane molded product and the vinyl chloride resin molded product are separately prepared and are subsequently adhered to one another by thermal fusion bonding, thermal adhesion, or using a commonly known adhesive, or (2) a method in which raw materials of the foamed polyurethane molded product such as an isocyanate and a polyol are caused to react and polymerize on the vinyl chloride resin molded product while carrying out polyurethane foaming by a commonly known method to directly form the foamed polyurethane molded product on the vinyl chloride resin molded product may be adopted. The latter method (2) is more suitable because it involves a simple process and enables laminates of various different shapes to be obtained while easily achieving strong adhesion of the vinyl chloride resin molded product and the foamed polyurethane molded product.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, various measurements and evaluations were implemented according to the following methods.

### <Powder fluidity>

A vinyl chloride resin composition obtained in each example or comparative example was used to measure the bulk density from the weight thereof in a 100 mL vessel using a bulk specific gravity measurement apparatus described in JIS K-6720. The powder of the vinyl chloride resin composition loaded into the 100 mL vessel that was obtained during the above was returned to the bulk specific gravity measurement apparatus, and the time taken for all of the powder to flow when a damper was opened soon thereafter was measured to determine the number of seconds to fall. Note that an evaluation of "does not flow" was given in a case in which flow of the powder was not complete even after 1 minute of waiting. Moreover, the operations described above were each performed at normal temperature (23°C). Furthermore, a smaller number of seconds to fall indicates that the vinyl chloride resin composition has better powder fluidity.

### <Low-temperature tensile elongation>

### [Pre-heating (initial)]

An obtained vinyl chloride resin molded sheet was punched out with a No. 1 dumbbell described in JIS K6251, and then tensile breaking elongation (%) at a low temperature of -10°C was measured in accordance with JIS K7113 at a tensing rate of 200 mm/min. A larger value for the tensile breaking elongation indicates that the vinyl chloride resin molded sheet has better pre-heating (initial) low-temperature tensile elongation.

### [Post-heating (heat aging test)]

A laminate lined with a foamed polyurethane molded product was used as a sample. The sample was placed inside an oven and was heated in an environment having a temperature of 120°C for 400 hours. Next, the foamed polyurethane molded product was peeled from the post-heating laminate to prepare just a vinyl chloride resin molded sheet. The tensile breaking elongation (%) of the vinyl chloride resin molded sheet after 400 hours of heating at 120°C was then measured under the same conditions as for the initial state described above. A larger value for the tensile breaking elongation indicates that the vinyl chloride resin molded sheet has better post-heating (heat aging test) low-temperature tensile elongation.

### [Change between before and after heating]

The change of the tensile breaking elongation between before and after heating was calculated by a formula: (Change between before and after heating) = 100 × (Y - X)/X [%], where X is the value of the pre-heating tensile breaking elongation and Y is the value of the post-heating tensile breaking elongation.

### <Tear fusion>

A vinyl chloride resin molded sheet was cut to dimensions of 8 cm in length by 2 cm in width (thickness: 1 mm) to prepare a strip-shaped test specimen. A knife was used to make a 2 cm incision (depth: 0.8 mm; remaining thickness: 0.2 mm) in the width direction at a central position in the length direction in a surface at an opposite side of the test specimen to a textured surface thereof. The test specimen was placed inside of a 120°C oven and was heated therein for 5 days. Thereafter, the test specimen was removed from the oven and was cooled at room temperature. Using a tensile test machine, a position when a preliminary load of 0.2 N was applied to the test specimen at 10 mm/min in the length direction was taken as an origin, and then the test specimen was observed while tensing the test specimen at 200 mm/min in the length direction until the incision was visible. The displacement from the origin until the incision was visible was measured. Note that a judgement that the "incision was visible" was made at a point in which even part of the incision formed in the test specimen became open and visible through tensing. Five measurements were made by repeating the operation described above, and an average value was determined for the displacement from the origin until the incision was visible. A judgement of "no fusion" was made in a case in which the average value for the displacement from the origin until the incision was visible was 30 mm or less, and a judgement of "fusion" was made in a case in which this average value was more than 30 mm. When a judgement of "no fusion" is made, this means that tear fusion of the vinyl chloride resin molded sheet can be sufficiently suppressed. Moreover, in a case in which the average value for the displacement from the origin until the incision is visible is 30 mm or less, a smaller value for this average value indicates better performance in terms of suppressing tear fusion of the vinyl chloride resin molded sheet.

### <Gloss change>

A laminate including a vinyl chloride resin molded sheet lined with a foamed polyurethane molded product was cut to dimensions of 7 cm × 14 cm to obtain a test specimen.

The test specimen was heated under conditions of 400 hours at 120°C in a Geer oven, and the change (Δgloss) of glossiness (gloss) of the surface skin between before and after heating was determined.

Specifically, the change (Δgloss) of glossiness of the surface skin was determined by measuring glossiness (incident angle: 60°) at a surface skin side of the test specimen using a gloss meter (produced by Tokyo Denshoku Co., Ltd.; product name: Gloss Meter GP-60), and then determining Δgloss as the difference between the pre-heating glossiness and the post-heating glossiness (i.e., pre-heating glossiness - post-heating glossiness). A value of closer to zero for Δgloss indicates that gloss change between before and after heating of the vinyl chloride resin molded sheet can be suppressed.

### (Example 1)

### <Production of vinyl chloride resin composition>

With the exception of plasticizers (adipic acid polyester, trimellitic acid ester, and epoxidized soybean oil) and vinyl chloride resin fine particles used as a dusting agent, components indicated in Table 1 were loaded into and mixed in a Henschel mixer. At the point at which the temperature of the mixture rose to 80°C, all of the plasticizers were added, and drying up of the mixture was caused to occur (i.e., the mixture changed to a dry state through absorption of the plasticizers by vinyl chloride resin particles used as a vinyl chloride resin). Thereafter, once the dried-up mixture had cooled to a temperature of 70°C or lower, the vinyl chloride resin fine particles used as the dusting agent were added to the mixture to produce a vinyl chloride resin composition.

The obtained vinyl chloride resin composition was used to evaluate powder fluidity. The result is shown in Table 1.

### <Formation of vinyl chloride resin molded product>

A vinyl chloride resin molded sheet having dimensions of 145 mm × 175 mm × 1 mm was produced as follows.

Specifically, the vinyl chloride resin composition obtained as described above was sprinkled onto a textured mold that was heated to a temperature of 250°C and, after being left to melt for an arbitrary time, excess vinyl chloride resin composition was shaken off. Thereafter, the textured mold onto which the vinyl chloride resin composition had been sprinkled was placed at rest in an oven set to a temperature of 200°C, and, once 60 seconds had passed after being placed at rest, the textured mold was cooled with cooling water. Once the mold temperature had dropped to 40°C, a vinyl chloride resin molded sheet was removed from the mold as a vinyl chloride resin molded product.

The obtained vinyl chloride resin molded sheet was used to evaluate pre-heating (initial) low-temperature tensile elongation. The result is shown in Table 1.

### <Formation of laminate>

Two obtained vinyl chloride resin molded sheets (dimensions: 145 mm × 175 mm × 1 mm) were arranged inside of a 200 mm × 300 mm × 10 mm mold with the textured surface facing downward.

Separately thereto, a polyol mixture containing 50 parts by mass of a propylene oxide/ethylene oxide (PO/EO) block adduct of propylene glycol (hydroxyl value: 28 mg KOH/g; terminal EO unit content: 10%; internal EO unit content: 4%), 50 parts by mass of a PO/EO block adduct of glycerin (hydroxyl value: 21 mg KOH/g; terminal EO unit content: 14%), 2.5 parts by mass of water, 0.2 parts by mass of an ethylene glycol solution of triethylenediamine (produced by Tosoh Corporation; product name: TEDA-L33), 1.2 parts by mass of triethanolamine, 0.5 parts by mass of triethylamine, and 0.5 parts by mass of a foam stabilizer (produced by Shin-Etsu Chemical Co., Ltd.; product name: F-122) was mixed with polymethylene polyphenylene polyisocyanate (polymeric MDI) in a ratio determined to give an index of 98 so as to prepare a mixed liquid. The prepared mixed liquid was poured onto the vinyl chloride resin molded sheets that had been placed in the mold as described above. Thereafter, the mold was covered by a 348 mm × 255 mm × 10 mm aluminum plate to seal the mold. The mold was left for 5 minutes after sealing thereof so as to form a laminate in which a vinyl chloride resin molded sheet (thickness: 1 mm) serving as a surface skin was lined with a foamed polyurethane molded product (thickness: 9 mm; density: 0.18 g/cm³).

The formed laminate was removed from the mold, and tear fusion, gloss change, and post-heating low-temperature tensile elongation were evaluated for the vinyl chloride resin molded sheet in the laminate. The results are shown in Table 1.

### (Examples 2 to 7)

Production of a vinyl chloride resin composition, formation of a vinyl chloride resin molded sheet, and formation of a laminate were carried out and various measurements and evaluations were performed in the same way as in Example 1 with the exception that in production of the vinyl chloride resin composition of Example 1, the type and used amount of starch were changed as indicated in Table 1. The results are shown in Table 1.

### (Comparative Example 1)

Production of a vinyl chloride resin composition, formation of a vinyl chloride resin molded sheet, and formation of a laminate were carried out and various measurements and evaluations were performed in the same way as in Example 1 with the exception that in production of the vinyl chloride resin composition of Example 1, starch was not added. The results are shown in Table 1.

**[Table 1]**

| | | | Comparative Example 1 | Example 1 | Example 2 | Example 3 | Example 4 | Example 5 | Example 6 | Example 7 |
|---|---|---|---|---|---|---|---|---|---|---|
| | Vinyl chloride resin | Vinyl chloride resin particles (average degree of polymerization: 1700)⁽¹⁾ [parts by mass] | 100 | 100 | 100 | 100 | 100 | 100 | 100 | 100 |
| | | Vinyl chloride resin fine particles (average degree of polymerization: 800)⁽²⁾ [parts by mass] | 14 | 14 | 14 | 14 | 14 | 14 | 14 | 14 |
| | Plasticizer | Trimellitic acid ester⁽³⁾ [parts by mass] | 10 | 10 | 10 | 10 | 10 | 10 | 10 | 10 |
| | | Adipic acid polvester⁽⁴⁾ [parts by mass] | 110 | 110 | 110 | 110 | 110 | 110 | 110 | 110 |
| | | Epoxidized soybean oil⁽⁵⁾ [parts by mass] | 5 | 5 | 5 | 5 | 5 | 5 | 5 | 5 |
| | Stabilizer | Perchloric acid-substituted hydrotalcite ⁽⁶⁾ [parts by mass] | 2.5 | 2.5 | 2.5 | 2.5 | 2.5 | 2.5 | 2.5 | 2.5 |
| | | Zeolite⁽⁷⁾ [parts by mass] | 1.2 | 1.2 | 1.2 | 1.2 | 1.2 | 1.2 | 1.2 | 1.2 |
| | | Stearoyl benzoyl methane (β-diketone)⁽⁸⁾ [parts by mass] | 0.5 | 0.5 | 0.5 | 0.5 | 0.5 | 0.5 | 0.5 | 0.5 |
| | | Hindered amine light stabilizer ⁽⁹⁾ [parts by mass] | 0.6 | 0.6 | 0.6 | 0.6 | 0.6 | 0.6 | 0.6 | 0.6 |
| Formulation | | Zinc stearate⁽¹⁰⁾ [parts by mass] | 0.2 | 0.2 | 0.2 | 0.2 | 0.2 | 0.2 | 0.2 | 0.2 |
| | | 12-Hydroxystearic acid⁽¹¹⁾ [parts by mass] | 0.6 | 0.6 | 0.6 | 0.6 | 0.6 | 0.6 | 0.6 | 0.6 |
| | Starch | Rice starch A (volume-average particle diameter: 2.2 µm)⁽¹²⁾ [parts by mass] | - | 5 | 10 | - | - | - | - | - |
| | | Rice starch B (volume-average particle diameter: 3.0 µm)⁽¹³⁾ [parts by mass] | - | - | - | 2 | 5 | 10 | - | - |
| | | Corn starch C (volume-average particle diameter: 15.6 µm)⁽¹³⁾ [parts by mass] | - | - | - | - | - | - | 10 | - |
| | | Potato starch D (volume-average particle diameter: 43.6 µm)⁽¹³⁾ [parts by mass] | - | - | - | - | - | - | - | 10 |
| | Amide compound | Ethylene bisoleamide⁽¹⁶⁾ [parts by mass] | 0.5 | 0.5 | 0.5 | 0.5 | 0.5 | 0.5 | 0.5 | 0.5 |
| | Pigment | Black⁽¹⁷⁾ [parts by mass] | 1.1 | 1.1 | 1.1 | 1.1 | 1.1 | 1.1 | 1.1 | 1.1 |
| Volume-average particle diameter of starch [µm] | | | - | 2.2 | 2.2 | 3.0 | 3.0 | 3.0 | 15.6 | 43.6 |
| Content relative to 100 parts by mass of vinyl chloride resin | | Starch [parts by mass] | - | 4.4 | 8.8 | 1.8 | 4.4 | 8.8 | 8.8 | 8.8 |
| | | Adipic acid polyester [parts by mass] | 96.5 | 96.5 | 96.5 | 96.5 | 96.5 | 96.5 | 96.5 | 96.5 |
| | | Trimellitic acid ester [parts by mass] | 8.8 | 8.8 | 8.8 | 8.8 | 8.8 | 8.8 | 8.8 | 8.8 |
| | | Epoxidized soybean oil [parts by mass] | 4.4 | 4.4 | 4.4 | 4.4 | 4.4 | 4.4 | 4.4 | 4.4 |
| | | Total plasticizer [parts by mass] | 109.6 | 109.6 | 109.6 | 109.6 | 109.6 | 109.6 | 109.6 | 109.6 |
| Proportional content of each type of plasticizer among plasticizer | | Adipic acid polyester [mass%] | 88 | 88 | 88 | 88 | 88 | 88 | 88 | 88 |
| | | Trimellitic acid ester [mass%] | 8 | 8 | 8 | 8 | 8 | 8 | 8 | 8 |
| | | Epoxidized soybean oil [mass%] | 4 | 4 | 4 | 4 | 4 | 4 | 4 | 4 |
| Starch content relative to 100 parts by mass of plasticizer [parts by mass] | | | - | 4 | 8 | 1.6 | 4 | 8 | 8 | 8 |
| | Powder fluidity | No. of seconds to fall [s] | 12.7 | 13.0 | 14.6 | 13.9 | 12.8 | 14.8 | 15.4 | 13.8 |
| | | Bulk density [g/cm³] | 0.59 | 0.60 | 0.61 | 0.59 | 0.60 | 0.61 | 0.60 | 0.57 |
| | Low-temperature tensile elongation | Pre-heating (initial) [%] | 221 | 185 | 153 | 210 | 185 | 159 | 172 | 214 |
| | | Post-heating (after 400 hr at 120°C) [%] | 197 | 180 | 154 | 192 | 190 | 157 | 157 | 190 |
| | | Change between before and after heating [%] | -10.7 | -2.9 | 1.0 | -8.6 | 2.5 | -1.1 | -8.5 | -11.4 |
| Evaluation results | Tear fusion | Average value of displacement at which incision is visible [mm] | 32.7 | 28.0 | 20.4 | 24.7 | 26.5 | 20.3 | 4.4 | 6.9 |
| | | Judgement (occurrence of tear fusion) | Yes | No | No | No | No | No | No | No |
| | Gloss change | Pre-heating (initial) glossiness (gloss) | 1.1 | 1.1 | 1.0 | 1.1 | 1.0 | 1.1 | 1.1 | 1.1 |
| | | Post-heating (after 400 hr at 120°C) glossiness (gloss) | 1.9 | 1.8 | 1.7 | 2.2 | 1.8 | 1.7 | 1.5 | 1.6 |
| | | Glossiness change between before and after heating (Δgloss) | 0.8 | 0.7 | 0.7 | 1.0 | 0.8 | 0.7 | 0.4 | 0.5 |

(1) Product name: ZEST^{®} (ZEST is a registered trademark in Japan, other countries, or both) 1700ZI (produced by suspension polymerization; average degree of polymerization: 1,700; average particle diameter: 129 µm); produced by Shin Dai-ichi Vinyl Corporation
(2) Product name: ZEST PQLTX (produced by emulsion polymerization; average degree of polymerization: 800; average particle diameter: 1.8 µm); produced by Shin Dai-ichi Vinyl Corporation
(3) Product name: TRIMEX N-08 (tri-n-alkyl trimellitate (mixture of n-octyl groups and n-decyl groups as n-alkyl groups)); produced by Kao Corporation
(4) Product name: ADK CIZER HPN-3130; produced by Adeka Corporation
(5) Product name: ADK CIZER O-130S; produced by Adeka Corporation
(6) Product name: ALCAMIZER^{®} 5 (ALCAMIZER is a registered trademark in Japan, other countries, or both); produced by Kyowa Chemical Industry Co., Ltd.
(7) Product name: MIZUKALIZER DS; produced by Mizusawa Industrial Chemicals, Ltd.
(8) Product name: Karenz DK-1; produced by Showa Denko K.K.
(9) Product name: ADK STAB LA-63P; produced by Adeka Corporation
(10) Product name: SAKAI SZ2000; produced by Sakai Chemical Industry Co., Ltd.
(11) Product name: ADK STAB LS-12; produced by Adeka Corporation
(12) Product name: FINE SNOW (rice starch; volume-average particle diameter: 2.2 µm); produced by Joetsu Starch Co., Ltd.
(13) Product name: Mochiru B (rice starch; volume-average particle diameter: 3.0 µm); produced by Joetsu Starch Co., Ltd.
(14) Product name: Starch, Corn (corn starch; volume-average particle diameter: 15.6 µm); produced by Kanto Chemical Co., Inc.
(15) Product name: Starch, Potato (potato starch; volume-average particle diameter: 43.6 µm); produced by Kanto Chemical Co., Inc.
(16) Product name: SLIPACKS^{®} O (SLIPACKS is a registered trademark in Japan, other countries, or both); produced by Nippon Kasei Chemical Co., Ltd.
(17) Product name: DA PA 4720; produced by Dainichiseika Color and Chemicals Mfg. Co., Ltd.

It can be seen from Table 1 that a vinyl chloride resin molded product in which tear fusion is suppressed is obtained when using the vinyl chloride resin compositions of Examples 1 to 7, which each contain a vinyl chloride resin, a plasticizer, and starch.

In contrast, it can be seen that tear fusion of a formed vinyl chloride resin molded product cannot be suppressed when using the vinyl chloride resin composition of Comparative Example 1, which does not contain starch.

### INDUSTRIAL APPLICABILITY

According to the present disclosure, it is possible to provide a vinyl chloride resin composition that is capable of forming a vinyl chloride resin molded product in which tear fusion is suppressed.

Moreover, according to the present disclosure, it is possible to provide a vinyl chloride resin molded product in which tear fusion is suppressed.

Furthermore, according to the present disclosure, it is possible to provide a laminate including this vinyl chloride resin molded product.

## Claims

1. A vinyl chloride resin composition comprising a vinyl chloride resin, a plasticizer, and starch.

2. The vinyl chloride resin composition according to claim 1, wherein content of the starch is not less than 1 part by mass and not more than 30 parts by mass relative to 100 parts by mass of the vinyl chloride resin.

3. The vinyl chloride resin composition according to claim 1, wherein the starch has a volume-average particle diameter of 200 µm or less.

4. The vinyl chloride resin composition according to claim 1, wherein content of the starch is not less than 1 part by mass and not more than 30 parts by mass relative to 100 parts by mass of the plasticizer.

5. The vinyl chloride resin composition according to claim 1, wherein content of the plasticizer is not less than 30 parts by mass and not more than 200 parts by mass relative to 100 parts by mass of the vinyl chloride resin.

6. The vinyl chloride resin composition according to claim 1, wherein the plasticizer includes a polyester.

7. The vinyl chloride resin composition according to claim 6, wherein content of the polyester is not less than 30 parts by mass and not more than 200 parts by mass relative to 100 parts by mass of the vinyl chloride resin.

8. The vinyl chloride resin composition according to claim 1 used in powder molding.

9. The vinyl chloride resin composition according to claim 1 used in powder slush molding.

10. A vinyl chloride resin molded product obtained through molding of the vinyl chloride resin composition according to any one of claims 1 to 9.

11. The vinyl chloride resin molded product according to claim 10 for a surface skin of an automobile interior component.

12. A laminate comprising: a foamed polyurethane molded product; and the vinyl chloride resin molded product according to claim 10.
